**Europäisches Patentamt**

**European Patent Office**

**Office européen des brevets**

(19)

(11) Veröffentlichungsnummer : **0 237 490 B1**

## (12) EUROPÄISCHE PATENTSCHRIFT

(45) Veröffentlichungstag der Patentschrift :
15.05.91 Patentblatt 91/20

(51) Int. Cl.⁵ : **B25B 5/10**, B23Q 3/06,
B23Q 3/10

(21) Anmeldenummer : 87810174.0

(22) Anmeldetag : 26.03.87

(54) Anschlageinheit und Bausatz zum Spannen von Werkstücken.

(30) Priorität : 27.03.86 CH 1257/86

(43) Veröffentlichungstag der Anmeldung :
16.09.87 Patentblatt 87/38

(45) Bekanntmachung des Hinweises auf die
Patenterteilung :
15.05.91 Patentblatt 91/20

(84) Benannte Vertragsstaaten :
AT BE CH DE ES FR GB IT LI LU NL SE

(56) Entgegenhaltungen :
CH-A- 250 142
DE-A- 1 602 912
DE-A- 3 035 595
FR-A- 2 267 856
FR-A- 2 321 622
FR-A- 2 411 667
FR-A- 2 530 520
WERKSTATTSTECHNIK, ZEITSCHRIFT FÜR
INDUSTRIELLE FERTIGUNG, Band 74, Nr. 12,
Dezember 1984, Seiten 701-702, Springer-
Verlag, Würzburg, DE; "Mit Kugeln Vorrichtungsbauteile und Werkstücke positionieren "

(56) Entgegenhaltungen :
WERKSTATTSTECHNIK, ZEITSCHRIFT FÜR
INDUSTRIELLE FERTIGUNG, Band 71, Nr. 11,
November 1981, Seiten 675-678, Springer-
Verlag, Würzburg, DE; R. BLÜMLE et al.:
"Vorrichtungen aus dem Raster-Spannsy-
stem-Baukasten"
WERKSTATT UND BETRIEB, Band 116, Nr. 3,
März 1983, Seiten 133-137, München, DE; H.
GENSCHOW et al.: "Duplex-Fertigungszelle
zum automatischen Bohren und Fräsen"
METAALBEWERKING, Band 29, Nr. 15, 23.
Januar 1964, Seite 326, Middelburg, NL; "De
coordinatenklem"
THE TOOL AND MANUFACTURING ENGI-
NEER, Band 49, Nr. 6, Dezember 1962, Seite
76, Milwaukee, US; K. TODD: "Clamping device serves as part locator"

(73) Patentinhaber : **Müller & Meier AG**
**Präzisionsmechanik**
**Flawilerstrasse 17**
**CH-9202 Gossau (SG) (CH)**

(72) Erfinder : **Müller, Erich**
**Bruggwaldstrasse 58 b**
**CH-9008 St. Gallen (CH)**

(74) Vertreter : **Riederer, Conrad A., Dr.**
**Bahnhofstrasse 10**
**CH-7310 Bad Ragaz (CH)**

## Beschreibung

Die Erfindung betrifft einen Bausatz mit einer Lochrasterplatte, mindestens mit einem Auflageblock, Anschlagmitteln für das Werkstück, einer Spannbride und Mitteln zum Spannen der Bride, zum Positionieren und Spannen von zu bearbeitenden Werkstücken, wobei der Auflageblock oben eine Auflagefläche für das Werkstück und unten eine ebene Grundfläche zur Auflage auf die Lochrasterplatte und Ausrichtmittel zum Ausrichten des Auflageblocks auf der Lochrasterplatte aufweist und wobei die Anschlagmittel durch eine Fläche des Auflageblocks gebildet werden, welche parallel zur Richtung der Ausrichtmittel und senkrecht zur Grundfläche ausgerichtet ist, und die Ausrichtmittel durch mindestens zwei Passbohrungen zur Aufnahme von Passmitteln für die Lochrasterplatte gebildet sind.

Zum spanabhebenden Bearbeiten von Werkstücken werden vielfach spezielle Spannvorrichtungen gebaut, die der Form des Werkstücks angepasst sind. Der Bau solcher Spannvorrichtungen ist jedoch sehr kostenintensiv. Wenn in einem Betrieb viele solcher speziellen Spanneinrichtungen verwendet werden, erfordert dies auch eine aufwendige Lagerhaltung. Dabei kann es trotzdem vorkommen, dass nach längeren Unterbrüchen im Gebrauch die gewünschte Spannvorrichtung nicht sofort gefunden wird und viel Zeit darauf verwendet werden muss, die Vorrichtung unter einer Vielzahl von ähnlichen Vorrichtungen aufzufinden.

Für kleinere Werkstückserien lohnt sich der Bau einer speziellen Spannvorrichtung nicht. Es finden daher schon seit längerer Zeit Bausätze Verwendung, die beispielsweise aus einer Lochrasterplatte, einer Anzahl von Anschlagseinheiten, einer Anzahl von Auflageeinheiten und mindestens einer Spanneinheit bestehen. So kann beispielsweise ein flaches, rechteckiges Werkstück auf drei oder vier Auflageeinheiten gelegt, gegen zwei Anschlagseinheiten angeschlagen und mit einer Spanneinheit gespannt werden. Alle diese Einheiten werden auf der Lochrasterplatte befestigt. Die Anschlageinheiten sind durch Schrauben justierbar, wobei jeweils mit einer Messuhr die genaue Einstellung erfolgt. Nachteilig bei diesem System sind die relativ hohen Einrichtzeiten. Ausserdem besteht bei einer numerisch gesteuerten Maschine die Gefahr einer Kollision von Werkzeugen mit Teilen der verschiedenen Einheiten, weil bei einer Justage der Anschläge sich Abweichungen zur früheren Konstellation der Einheiten ergeben können. Es ist also möglich, dass ein Programm für die Werkzeugmaschine, das beim früheren Einsatz auf die Kollisionsgefahr überprüft wurde, bei einem späteren Einsatz zu Kollisionen zwischen Werkzeug und Einheiten des Spannsystems führen kann. Es ist daher bei jedem neuen Einrichten die Kollisionsgefahr neu abzuklären. Das jeweilige neue Einstellen der Anschläge und der Ueberprüfung der Kollisionsgefahr führt zu einer hohen Einrichtzeit.

Bei einem anderen Baukasten-Spannsysteme sind verstellbare Spanneisen, verschiebbare Auflageleisten und Auflage- und Anlageleisten vorgesehen, welche auf einer Lochrasterplatte angeordnet werden können. (Werkstatt und Betrieb, Vol. 116 (1983) März, No. 3, Seiten 133-137). Nachteilig ist dabei, dass jedes Element in der Regel nur eine Funktion aufweist, also beispielsweise dass Spanneisen nur Spannfunktion und keine Anschlagfunktion und die Anlageleistennur Anschlagfunktion und keine Spannfunktion aufweisen. Im Gegensatz zu einer Anschlageinheit, die sowohl Anschlag-und Spannfunktion aufweist, sind also immer mehrere Elemente notwendig, um Anschlag- und Spannfunktion auszuüben. Dadurch wird Lagerhalterung kompliziert, und durch die Notwendigkeit, zwei Elemente statt einer Einheit auf die Lochrasterplatte zu montieren, wird die Einrichtzeit erhöht. Auch erfordert beispielsweise die notwendige Nebeneinanderanordnung von Auflage- und Anlageleiste und Spanneisen relativ viel Platz und verunmöglicht in gewissen Fällen den Bau eines zweckmässigen Spannsystems.

Es ist daher Aufgabe der vorliegenden Erfindung, eine Anschlageinheit zu schaffen, mit welcher die Einrichtzeiten stark gesenkt werden können.

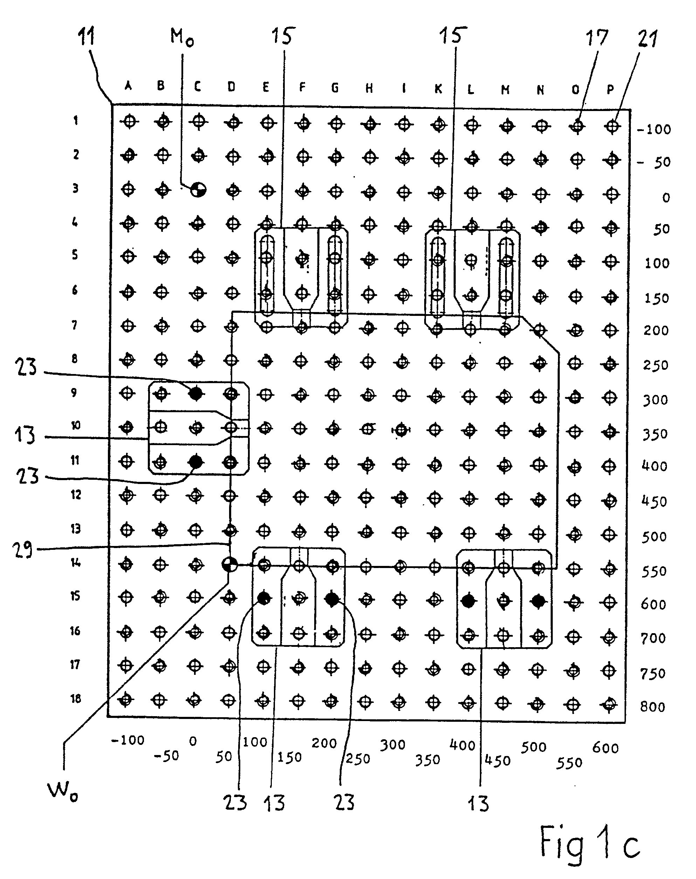

Die Erfindung ist durch den Anspruch 1 definiert. Da der Auflageblock ein starres Gebilde darstellt und nach der Befestigung auf der Lochrasterplatte durch die üblichen Passstifte mit einer Toleranz von weniger als 0,02 mm genau ausgerichtet ist, befindet sich die Anschlagfläche in Bezug auf das Lochrastersystem immer genau ausgerichtet. Mit der genauen Festlegung der Anschlagfläche ist auch der Bereich festgelegt, innerhalb welchem eine Bewegung der Spannbride erfolgen kann. Wurde somit beim erstmaligen Aufbau einer Spanneinrichtung bestehend aus Lochrasterplatte und einigen Anschlag- und Anstelleinheiten das Bearbeitungsprogramm entwickelt und auf Kollisionsgefahr geprüft, so kann bei einem erneuten Aufbau einer solchen Spannvorrichtung davon ausgegangen werden, dass keinerlei Kollisionsgefahr besteht. Die gleichen Einheiten können immer wieder zum Aufbau von verschiedenen Spanneinrichtungen verwendet werden, so dass dadurch die Lagerhaltung und Lagerkontrolle stark vereinfacht werden. Dies ist von besonders grosser Bedeutung, wenn in einem Betrieb sehr viele relativ kleine Serien von Werkstücken bearbeitet werden müssen. Da die Anschlagfläche in der gleichen Ebene liegt wie die Achse, auf der die Ausrichtmittel angeordnet sind, kommt die Anschlagfläche immer senkrecht über eine Rasterlinie der Lochrasterplatte zu liegen. Es besteht daher keine Notwendigkeit, den Nullpunkt abzutasten, wie dies nachfolgend unter Bezug auf die Fig. 1c beschrieben wird. Die Einrichtzeit wird dadurch entsprechend weiter verkürzt.

Vorteilhaft werden die Ausrichtmittel durch vier Passbohrungen gebildet, von denen zwei Achsen aufweisen, die in der gleichen Ebene liegen wie die Anschlagflächen, während die übrigen zwei Passbohrungen Achsen aufweisen, die in einer Ebene parallel dazu liegen, wobei die Achsabstände dem Rastermass oder einem Vielfachen desselben entsprechen.

Ein Ausführungsbeispiel der Erfindung wird nun unter Bezugnahme auf die Zeichnung beschrieben. Es zeigt :

Fig. 1a eine Seitenansicht eines Bausatzes mit einer Lochrasterplatte, einer Anschlageinheit und einer Anlegeeinheit, zwischen welchen das Werkstück eingespannt ist,

Fig. 1b einen Abschnitt der Lochrasterplatte von Fig. 1a von oben gesehen,

Fig. 1c die Lochrasterplatte von Fig. 1 mit drei Anschlageinheiten, zwei Anlegeeinheiten und einem Werkstück im Einsatz auf einer Werkzeugmaschine,

Fig. 2 die Seitenansicht eines ersten Ausführungsbeispiels eine Anschlageinheit zur Verwendung auf Lochrasterplatten oder Paletten,

Fig. 3 die Anschlageinheit von Figur 2 von oben gesehen,

Fig. 4 eine Seitenansicht einer Anlegeeinheit,

Fig. 5 die Anlegeeinheit von Figur 4 von oben gesehen.

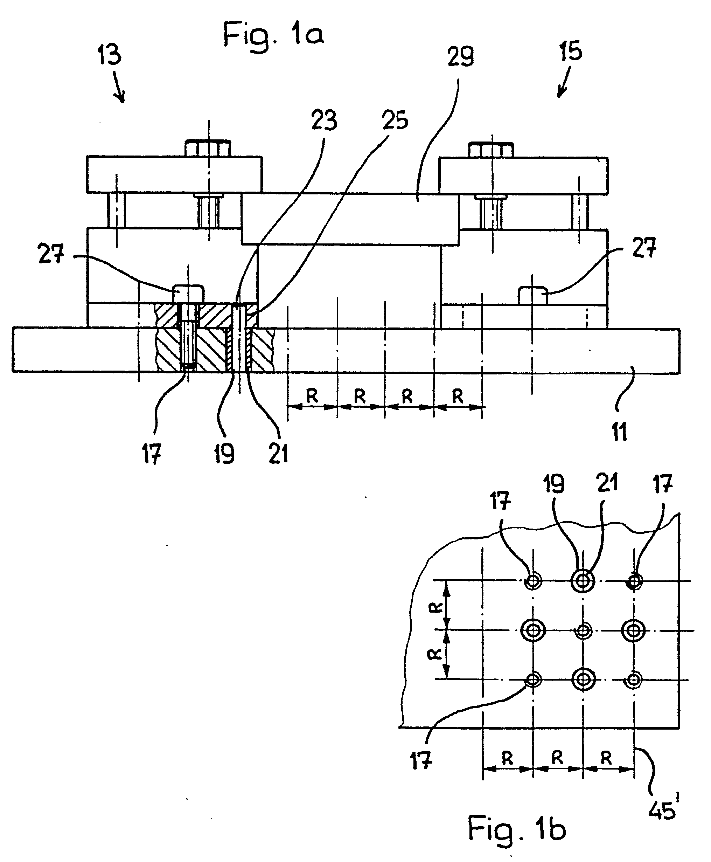

Der in Figur 1a, 1b und 1c gezeigte Bausatz umfasst mindestens eine Lochrasterplatte 11, mindestens eine Anschlageinheit 13 und mindestens eine Anstelleinheit 15. In der Lochrasterplatte 11 befinden sich eine Vielzahl von Bohrungen 17, 19 mit einem Rasterabstand R, z.B. 50 mm. Die Bohrungen 17 sind Gewindebohrungen ; die Bohrungen 19 enthalten eine gehärtete Stahlbüchse 21. Es sind aber auch Lochrasterplatten im Handel erhältlich, die im oberen Teil jeder Bohrung eine Stahlbüchse 21 aufweisen und im unteren Teil mit einem Gewinde versehen sind. In die Büchse 21 kann ein Stift 23 eingeschoben werden, der auch genau in die Bohrungen 25 der Anschlageinheit 13 passt. Durch Stifte 23 wird die Stellung der Anschlageinheit 13 auf der Lochrasterplatte 11 genau festgelegt.

Die Befestigung der Anschlag- und Anstelleinheiten 13, 15 auf der Lochrasterplatte erfolgt durch Schrauben 27.

In Figur 1a ist auch das Werkstück 29, z.B. eine zu bearbeitende Metallplatte, dargestellt, welche zwischen mindestens einer Anschlageinheit 13 und einer Anstelleinheit 15 eingespannt ist.

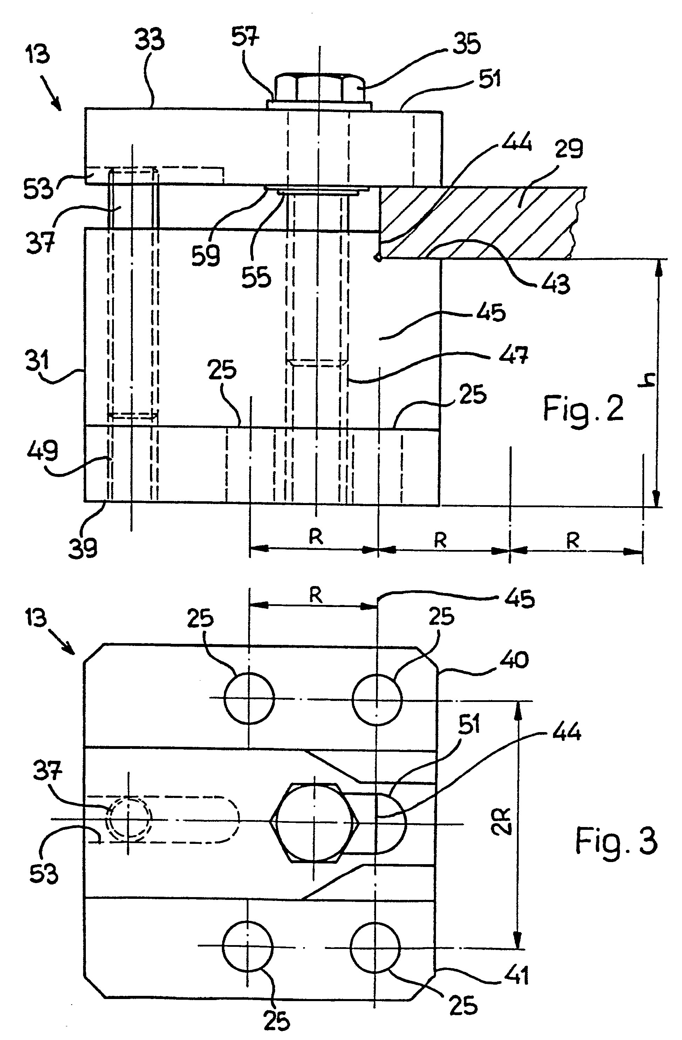

Unter Bezugnahme auf die Figuren 2 und 3 wird nun eine Anschlageinheit 13 näher beschrieben. Die Anschlageinheit 13 besteht im wesentlichen aus dem Auflageblock 31, der Spannbride 33, der Spannschraube 35 und der Abstützschraube 37 für die Spannbride 33.

Der Auflageblock 31 besitzt unten eine ebene geschliffene Grundfläche 39 zur Auflage auf die Grundplatte. In den Flansch 40, 41 sind vier mit einem Rasterabstand von R bzw. 2R angeordnete Passbohrungen 25 angebracht, von denen jeweils zwei der Aufnahme der Passstifte 23 und zwei der Aufnahme der Schrauben 27 (Fig. 1a) dienen.

In einem bestand h von der Grundfläche 39 befindet sich die parallel zu dieser Grundfläche 39 angeordnete Auflagefläche 43 für das Werkstück 29. Für den seitlichen Anschlag des Werkstücks 29 ist die Anschlagfläche 44 vorgesehen. Von besonderer Bedeutung ist nun, dass die senkrecht zur Grundfläche 39 angeordnete Anschlagfläche 44 parallel zur Mittellinie 45 von zwei Bohrungen 25 angeordnet ist. Dies hat zur Folge, dass die Anschlagfläche 44 nach der Montage der Anschlageinheit 13 auf der Lochrasterplatte 11 auch parallel zu einer Linie 45' verläuft, welche eine Linie des Lochrasters darstellt. Beim gezeigten Ausführungsbeispiel gemäss den Figuren 2 und 3 verläuft die Anschlagfläche 44 nicht bloss parallel zur Linie 45, sondern liegt auch in der gleichen Ebene wie diese Linie 45. Dies bedeutet, dass nach der Montage der Anschlageinheit auf der Lochrasterplatte die Anschlagfläche 44 auch in der gleichen Ebene liegt wie eine entsprechende Rasterlinie 45'. Auf diese Weise kann bei numerisch gesteuerten Maschinen der Werkstück-Nullpunkt einer Bearbeitungsachse auf einfache Weise festgelegt werden, was zu einer erheblichen Verkürzung der Einstellzeit führt.

Der Auflageblock 31 weist eine Gewindebohrung 47 oder Gewindebüchse für die Spannschraube 35 und eine Gewindebohrung 49 für die bestützschraube 37 auf.

Die Spannbride 33 besitzt einen Schlitz 51, der die Bewegung der Spannbride in Längsrichtung beschränkt, um eine Kollisionsgefahr mit Werkzeugen der Werkzeugmaschine zu verhindern. Eine Nut 53 dient der Aufnahme des oberen Teils der Abstützschraube 37. Die Spannschraube 35 wird am Herausfallen aus der Spannbride 33 durch einen Seegerring 55 gehindet. Mit dem Bezugszeichen 57 und 59 sind Unterlagsscheiben bezeichnet.

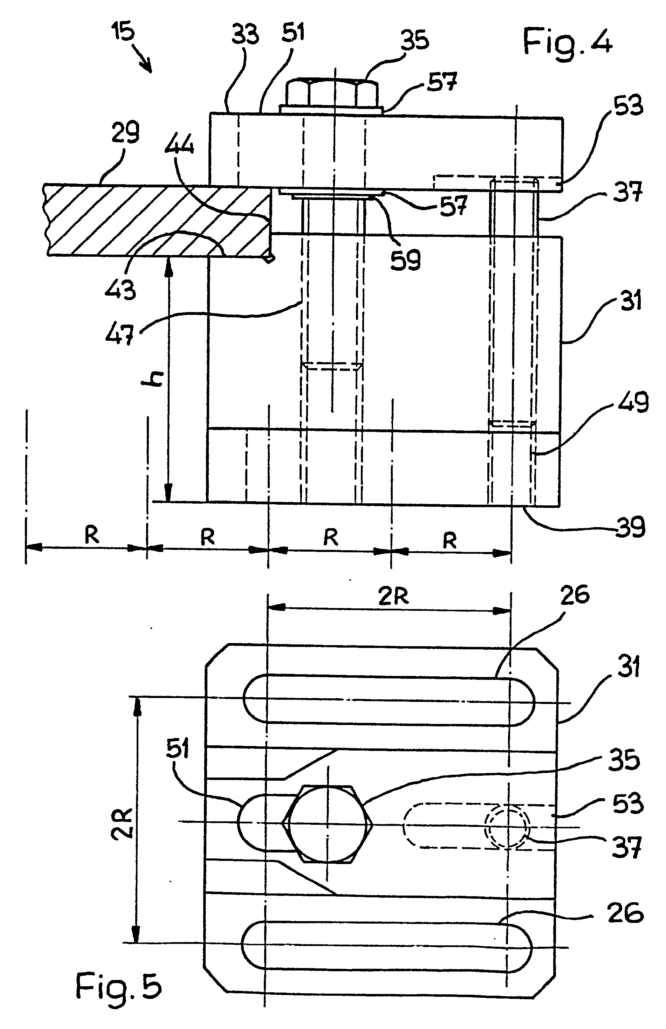

Die Anlegeeinheit 15 gemäss den Figuren 4 und 5 sind grundsätzlich gleich ausgebaut wie die zuvor beschriebene Anschlageinheit 13, weist aber anstelle der Passbohrungen 25 zwei Schlitze 26 auf, welche ein Verschieben der Anstelleinheit 15 auf der Grundplatte 11 ermöglichen. Die beinahe identische Ausgestaltung von Anschlageinheit und Anlegeeinheit ergibt erhebliche Vorteile für deren Fabrikation.

Es ist zu beachten, dass nach dem Aufbau einer Spanneinrichtung auf einer Grundplatte 11 unter Verwendung der beschriebenen Anschlag- und Anlegeeinheiten der getroffene Aufbau festgehalten werden kann. Mit anderen Worten, es kann z.B. notiert werden, in welchen Positionen der Lochplatte die einzelnen Einheiten montiert wurden. Nach der Demontage der Vorrichtung kann somit nach diesem Plan die Vorrichtung innert kürzester Zeit wieder genau gleich wie vorher hergestellt werden, so dass das gleiche Programm, das vorher für die Bearbeitung eines bestimmten Weikstücks für die numerisch gesteuerte Werkzeugmaschine eingesetzt wurde, ohne nähere Prüfung wieder verwendet werden kann, ohne dass eine Kollisionsgefahr besteht. Diese Möglichkeit, eine Spannvonichtung in kürzester Zeit aufzubauen und wieder zu demontieren, macht das beschriebene Baukastensystem äusserst flexibel und hält die Einrichtzeiten sehr kurz.

Diese Vorteile werden durch die Fig. 1c illustriert. Die dort abgebildete Lochrasterplatte 11 hat einen Lochrasterabstand von 50 mm. Die horizontalen Lochreihen sind mit fortlaufenden Zahlen und die vertikalen Lochreihen mit Buchstaben in alphabetischer Reihenfolge beschriftet. Da die Lochplatte 11 immer genau gleich in die Maschine eingesetzt wird, indem Passstifte die genaue Position festlegen, ist auch der Maschinennullpunkt $M_0$ immer am gleichen Ort, beim gezeigten Beispiel bei C3. Durch die Anschlageinheiten 23 wird beim gezeigten Beispiel der Werkzeugnullpunkt $W_0$ auf D14 festgelegt, also auf die Koordinaten X = 50, y = 550. Der Programmierer findet also bereits festgelegte Koordinaten vor. Der Arbeitsvorbereiter kann mit dem alpha-numerischen Gitter arbeiten. Mit selbstklebenden Bildern der Elemente kann er auf der Zeichnung die Stellung der Elemente in kürzester Zeit festlegen. Aufgrund dieser Arbeitsvorlage weiss der Einrichter genau, wo er die Elemente auf der Lochplatte plazieren muss. Da der Werkstücknullpunkt $W_0$ durch die Anschlageinheiten 23 genau festgelegt wird, entfällt für den Maschinisten das bisher notwendige Abtasten des Werkstücknullpunkts.

## Ansprüche

1. Bausatz mit einer Lochrasterplatte (11), mindestens mit einem Auflageblock (31), Anschlagmitteln (44) für das Werkstück (21), einer Spannbride (33) und Mitteln (35) zum Spannen der Bride (33), zum Positionieren und Spannen von zu bearbeitenden Werkstücken (29), wobei der Auflageblock (31) oben eine Auflagefläche (43) für das Werkstück (29) und unten eine ebene Grundfläche (39) zur Auflage auf die Lochrasterplatte (11) und Ausrichtmittel (25) zum Ausrichten des Auflageblocks (31) auf der Lochrasterplatte (11) aufweist und wobei die Anschlagmittel durch eine Fläche (44) des Auflageblocks (31) gebildet werden, welche parallel zur Richtung der Ausrichtmittel (25) und senkrecht zur Grundfläche (39) ausgerichtet ist, und die Ausrichtmittel durch mindestens zwei Passbohrungen (25) zur Aufnahme von Passmitteln (23) für die Lochrasterplatte (11) gebildet sind, dadurch gekennzeichnet, dass die Spannbride mit dem Auflageblock verbunden ist, und dass die Anschlagfläche (44) in der gleichen Ebene liegt wie die Achse (45), auf der die Ausrichtmittel (25) angeordnet sind.

2. Bausatz nach Anspruch 1, dadurch gekennzeichnet, dass die Ausrichtmittel durch vier Passbohrungen (25) gebildet sind, von denen zwei Achsen aufweisen, die in der gleichen Ebene liegen wie die Anschlagfläche (44), während die übrigen zwei Passbohrungen (25) Achsen aufweisen, die in einer Ebene parallel dazu liegen, wobei die Achsabstände dem Rastermass oder einem vielfachen desselben entsprechen.

## Claims

1. Set comprising a modular hole plate (11), at least one support block (31), abutment means (44) for the workpiece (21), a clamp (33), and means (35) for actuating the clamp (33) for positioning and clamping the workpiece (29) to be worked on, said support block (31) comprising an upper support surface (43) for the workpiece and a flat bottom surface (39) for resting on the modular hole plate (11), and aligning means (25) for aligning the support block (31) on the modular hole plate (11), said abutment means being provided by a surface (44) of the support block (31) and being aligned parallel to the direction of the aligning means (25) and perpendicular to the bottom surface (39), and the aligning means being provided by at least two fitting bores (25) for receiving fitting means (23) for the modular hole plate (11), characterised in that the clamp is connected with the support block, and in that the abutment surface (44) is located in the same plane as the axis (45) on which the aligning means (25) is located.

2. Set as in claim 1, characterised in that the aligning means are provided by four fitting bores (25) of which two have axes located in the same plane as the abutment surface (44), whereas the remaining two fitting bores (25) have axes located in a plane parallel to said first plane, the distances between the axes corresponding to the module or a multiple thereof.

## Revendications

1. Jeu d'éléments pour le positionnement et le serrage de pièces à usiner (29), comprenant une plaque (11) munie d'un réseau de trous, au moins un bloc d'appui (31), des moyens de butée (44) pour la pièce (29), une bride de serrage (33) et des moyens (35) pour le serrage de la bride (33), le bloc d'appui (31) présentant vers le haut une surface d'appui (43) pour la pièce (29) et, vers le bas, une surface de base plane (39) reposant sur la plaque (11) à réseau de trous et des moyens d'orientation (25) pour orienter le bloc d'appui (31) sur la plaque (11) à réseau de trous, les moyens de butée étant constitués par une surface (44) du bloc d'appui (31) qui est orientée parallèlement à la direction des moyens d'orientation (35) et perpendiculairement à la surface de base (39), et les moyens d'orientation étant constitués par au moins deux trous calibrés (25) destinés à recevoir des moyens calibrés (23) pour la plaque (11) à réseau de trous, caractérisé en ce que la bride de serrage est raccordée au bloc d'appui, et en ce que la surface de butée (44) est située dans le même plan que l'axe (45) sur lequel sont disposés les moyens d'orientation (25).

2. Jeu d'éléments selon la revendication 1, caractérisé en ce que les moyens d'orientation sont constitués par quatre forures calibrées (25) dont deux présentent des axes qui sont situés dans le même plan que la surface de butée (44), tandis qui les deux autres forures calibrées (25) présentent des axes qui sont situés dans un plan parallèle à ce plan, les distances entre axes correspondant au pas de quadrillage du réseau ou à un multiple de celui-ci.

Fig. 1a

Fig. 1b

Fig 1 c

Fig. 2

Fig. 3

8

Fig.4

15

33 51 35 57

29 44

53

57 37

59

43

47

31

h

49

R R R R 39

2R 26

31

51 35

2R 53

37

26

Fig.5